# EUROPÄISCHE PATENTSCHRIFT

(11) **EP 2 336 557 B1**
(45) Veröffentlichungstag und Bekanntmachung des Hinweises auf die Patenterteilung: **25.03.2015**
(21) Anmeldenummer: 09015592.0
(22) Anmeldetag: 17.12.2009
(51) Int. Cl.: F03D 7/04

(54) **Verfahren zum Betrieb einer Windenergieanlage mit einem leistungsreduzierten Betriebsmodus**
Method for operating a wind farm with a reduced power operating mode
Procédé de fonctionnement d'une éolienne dotée d'un mode de fonctionnement à puissance réduite

(43) Veröffentlichungstag der Anmeldung: 22.06.2011
(73) Patentinhaber: Nordex Energy GmbH, 22419 Hamburg (DE)
(72) Erfinder: Steinmetz, Guillaume, 93210 La Plaine Saint Denis (FR); Fonio, Joseph, 92300 Levallois-Perret (FR)
(74) Vertreter: Hauck Patentanwaltspartnerschaft mbB

(56) Entgegenhaltungen:
- EP-A1- 1 192 355
- WO-A1-01/86142
- WO-A1-2007/138450
- DE-A1-102007 025 314

## Beschreibung

Die vorliegende Erfindung betrifft ein Verfahren zum Betrieb einer Windenergieanlage, die in einen leistungsreduzierten Betriebsmodus geschaltet werden kann. In dem leistungsreduzierten Betriebsmodus ist der von der Windenergieanlage emittierte Schall reduziert, um beispielsweise bestehende Schallschutzvorschriften einhalten zu können.

Aus DE 10 2007 025 314 A1 ist eine Windkraftanlage und ein Verfahren zur Vermeidung von Kollisionen von fliegenden Tieren mit umlaufenden Flügeln eines Rotors einer Windkraftanlage bekannt. Zur Kollisionsvermeidung werden an den Rotorblättern lokale Schallquellen angebracht, die mit einem Schallspektrum abstrahlen, um die fliegenden Tiere vor den sich bewegenden Flügeln zu warnen. Ebenfalls wird beschrieben, dass die Abstrahlung von Schallsignalen unterbleibt, wenn ein Regensensor feststellt, dass Niederschlag fällt.

Aus EP 1 389 682 B1 ist ein Verfahren zum Betreiben eines Windparks bekannt, bei dem die Drehzahl und/oder Leistung der ersten Windenergieanlage in dem Windpark unter ihren maximal möglichen Nennwert eingestellt ist. Durch Leistungsreduzierung der ersten Windenergieanlage in einem Windpark soll sichergestellt werden, dass die Schallschutzvorschriften für den Schallpegel eingehalten werden können.

Aus EP 1 192 355 B1 ist ein Verfahren zum Betrieb eines Windparks mit wenigstens zwei Windenergieanlagen bekannt, bei dem in Abhängigkeit von der Uhrzeit die Drehzahl wenigstens einer der Windenergieanlagen derart eingestellt wird, dass an einem vorbestimmten Imissionspunkt ein vorbestimmter Schallpegel nicht überschritten wird. Neben der Abhängigkeit von der Uhrzeit wird beschrieben, auch die Windrichtung zu berücksichtigen. Alternativ ist vorgesehen, zusätzlich zu der Windrichtung und der Uhrzeit auch die Windstärke bei der Leistungsreduzierung zu benutzen.

Aus WO 01/86142 A1 ist eine Windenergieanlage mit wenigstens einem Sensor zum Erfassen der Zahl und/oder der Geschwindigkeit und/oder des Impulses von Partikeln, die auf den Sensor treffen, mit einer Datenverarbeitungs- und Steuereinrichtung zur Verarbeitung der von dem Sensor erfassten Messdaten, wobei die Drehzahl des Rotors des Windenergieanlage reduziert wird und/oder die Windenergieanlage stillgelegt wird, wenn ein vom Sensor gemessener Partikelmesswert überschritten wird.

Mit der Entwicklung von immer größeren Windenergieanlagen wird deren Geräuschemission für viele Standorte zu einem entscheidenden Kriterium. In Lärmschutzvorschriften wird beispielsweise festgelegt, dass der Schallpegel an bestimmten Schallimmissionspunkten einen bestimmten Wert nicht überschreiten darf. Es kann aber auch darauf abgestellt werden, dass der an einem Immissionspunkt ohne Betrieb der Windenergieanlage vorliegende Grundschallpegel durch den von einer Windenergieanlage erzeugten Schall nur um einen bestimmten Betrag erhöht werden darf.

Diese Vorschriften stellen für den Betrieb einer Windenergieanlage ein Problem dar. Bei bestimmten Windrichtungen und/oder Windgeschwindigkeiten kann es zu einer Überschreitung der vorgegebenen Werte am Immissionspunkt kommen. Die Windenergieanlage muss dann in einem schallreduzierten Betrieb gefahren werden. Außerdem ist der Grundschallpegel am Immissionspunkt in der Nacht niedriger als am Tag, was zur Folge hat, dass die Windenergieanlage in den Nachtstunden ebenfalls in einem schallreduzierten Betrieb gefahren werden muss. Es ist bekannt, bei Windenergieanlagen einen leistungsreduzierten Betriebsmodus vorzusehen, der es ermöglicht, abhängig von der Tageszeit, der Windrichtung und der Windstärke die Leistung der Windenergieanlage zu reduzieren und damit auch deren Schallemission. Nachteilig an den bekannten Verfahren ist, dass hierdurch der Ertrag aus den Windenergieanlagen geschmälert wird.

Der Erfindung liegt die Aufgabe zugrunde, ein Verfahren zum Betrieb einer Windenergieanlage mit einem leistungsreduzierten Betriebsmodus bereitzustellen, das bestehende Schallschutzvorschriften einhält, ohne den Ertrag der Windenergieanlage zu stark zu reduzieren.

Erfindungsgemäß wird die Aufgabe durch ein Verfahren mit den Merkmalen aus Anspruch 1 gelöst.

Das erfindungsgemäße Verfahren dient zum Betrieb einer Windenergieanlage, die in einen leistungsreduzierten Betriebsmodus geschaltet werden kann, um den von der Windenergieanlage emittierten Schall zu reduzieren. Das erfindungsgemäße Verfahren weist einen Verfahrensschritt auf, in dem ein Regensensor erfasst, ob Niederschlag fällt. In einem zweiten Schritt wird ein bereits laufender, leistungsreduzierter Betriebsmodus beendet oder ein Umschalten in den leistungsreduzierten Betriebsmodus verhindert, wenn der Regensensor Niederschläge erfasst. Die Erfindung beruht auf der Erkenntnis, dass durch den Regen die von der Windenergieanlage emittierten Schallwellen teilweise absorbiert werden und am Immissionspunkt durch den auftreffenden Niederschlag ein erhöhter Geräuschpegel besteht. Daraus ergibt sich die Möglichkeit, die Windenergieanlage bei Niederschlag nicht im leistungsreduzierten Betrieb zu fahren. Mit dem erfindungsgemäßen Verfahren wird also unter Einhaltung der Lärmschutzvorschriften sichergestellt, dass die Windenergieanlage auch ohne leistungsreduzierten Betriebsmodus betrieben werden kann. Insbesondere in Regionen mit häufigem Niederschlag kann hierdurch eine nicht unerhebliche Ertragssteigerung für die Windenergieanlage erzielt werden.

In einer bevorzugten Ausgestaltung des erfindungsgemäßen Verfahrens erfasst der Regensensor die Stärke der Niederschläge und ein Beenden des leistungsreduzierten Betriebsmodus oder ein Umschalten in den leistungsreduzierten Betriebsmodus unterbleibt, wenn die erfassten Niederschläge einen vorbestimmten Schwellwert überschreiten. Eine solche Schwellwertprüfung stellt sicher, dass bei schwachen Niederschlägen, die möglicherweise nicht ausreichen, um die Schallemissionen der Windenergieanlage zu unterdrücken, der leistungsreduzierte Betrieb fortgesetzt wird. Die Schwellwertprüfung stellt sicher, dass die Niederschläge ausreichend stark sind, um Schallemissionen der Windenergieanlage zu unterdrücken oder zu übertönen.

In einer weiteren bevorzugten Ausgestaltung des erfindungsgemäßen Verfahrens ist der Betrieb der Windenergieanlage in dem leistungsreduzierten Betriebsmodus während einer vorbestimmten Tages- und/oder Nachtzeit vorgesehen, wenn keine Niederschläge durch den Regensensor erfasst werden. Dies bedeutet, dass die Windenergieanlage bei beispielsweise fehlenden Niederschlägen zu einer Uhrzeit in den leistungsreduzierten Betriebsmodus schaltet und zu einer zweiten Uhrzeit den leistungsreduzierten Betriebsmodus beendet. Bei dem erfindungsgemäßen Verfahren ist es nun so, dass, wenn zwischen dem ersten und dem zweiten Zeitpunkt Niederschläge einsetzen, die Windenergieanlage nicht im leistungsreduzierten Betriebsmodus fährt, sondern eine höhere Leistungsproduktion möglich ist.

In einer besonders bevorzugten Ausgestaltung weist der leistungsreduzierte Betriebsmodus mindestens zwei unterschiedliche Leistungsmaximalwerte auf. Dies bedeutet, dass in dem leistungsreduzierten Betriebsmodus die Windenergieanlage mit unterschiedlichen Maximalleistungen unterhalb der Nennleistung betrieben werden kann. Sind mehrere unterschiedliche Leistungsmaximalwerte vorgesehen, so kann abhängig von der erfassten Stärke der Niederschläge entweder der leistungsreduzierte Betriebsmodus beendet oder innerhalb des leistungsreduzierten Betriebsmodus zu einem größeren Leistungsmaximalwert umgeschaltet werden. Dies bedeutet, dass bei starken Niederschlägen, die mit einem großen Geräuschpegel verbunden sind, der leistungsreduzierte Betriebsmodus beendet werden kann. Liegen dagegen Niederschläge vor, die zwar einen gewissen Geräuschpegel verursachen, aber noch nicht den Betrieb der Windenergieanlage mit Nennleistung zulassen, so kann innerhalb des leistungsreduzierten Betriebsmodus auf einen größeren Leistungsmaximalwert umgeschaltet werden.

Eine Windenergieanlage zur Durchführung der Erfindung weist eine Steuerung auf, die einen leistungsreduzierten Betriebsmodus besitzt. In dem leistungsreduzierten Betriebsmodus überschreitet der von der Windenergieanlage emittierte Schall nicht einen vorbestimmten Grenzwert. Der erfindungsgemäß vorgesehene Regensensor erfasst einen Niederschlag und leitet ein Steuersignal an die Steuerung weiter. Die Steuerung reagiert entsprechend auf das Steuersignal des Regensensors, indem entweder der leistungsreduzierte Betriebsmodus beendet oder ein Umschalten in den leistungsreduzierten Betriebsmodus verhindert wird. Bei der Windenergieanlage wird der leistungsreduzierte Betriebsmodus, in dem die Windenergieanlage weniger Leistung erzeugt als möglich, vermieden, während Niederschlag fällt. Auf diese Weise kann der Ertrag der Windenergieanlage gesteigert werden, ohne in Konflikt mit Lärmschutzvorschriften zu gelangen.

Der Regensensor ist an oder auf der Windenergieanlage montiert. Beispielsweise kann der Regensensor auf der Gondel der Windenergieanlage montiert sein. Auch ist es möglich, einen Regensensor in einer räumlichen Entfernung von dem Standort der Windenergieanlage zu montieren. Dies ist beispielsweise von Interesse, wenn der Regensensor eine Ertragsmenge pro Fläche erfassen kann.

In einer möglichen Ausgestaltung erfasst der Regensensor, ob Niederschlag fällt oder nicht. Bevorzugt ist der Regensensor als ein optischer Sensor ausgebildet, der das Steuersignal für eine Betriebssteuerung der Windenergieanlage generiert, wenn Niederschlag erfasst wurde.

Die Erfindung wird nachfolgend an einem Ausführungsbeispiel näher erläutert. Es zeigt:
- Fig. 1: eine Windenergieanlage mit einem Regensensor auf der Gondel in einer schematischen Ansicht,
- Fig. 2: den zeitlichen Verlauf für den leistungsreduzierten Betriebsmodus bei der Windenergieanlage, wenn für eine bestimmte Nachtzeit ein leistungsreduzierter Betrieb vorgesehen ist und
- Fig.3: den zeitlichen Verlauf des leistungsreduzierten Betriebs für eine Windenergieanlage, für die permanent ein leistungsreduzierter Betrieb vorgesehen ist.

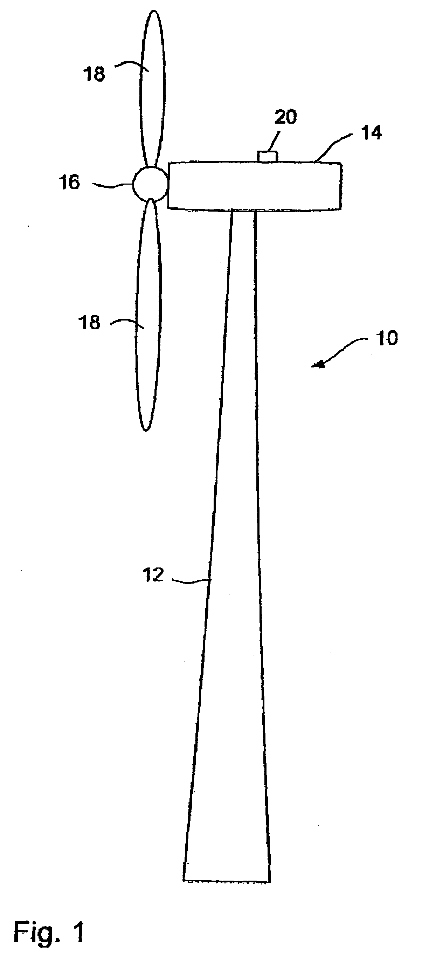

Fig. 1 zeigt eine Windenergieanlage 10 mit einem Turm 12 und einer Gondel 14. Die Gondel 14 trägt den Rotor 16 mit den Rotorblättern 18. Auf der Oberseite der Gondel 14 ist ein schematisch dargestellter Regensensor 20 vorgesehen, der erfasst, ob Niederschläge in Form von Regen, Schnee oder Eis vorliegt.

Der Regensensor kann beispielsweise ein Regensensor sein, wie er herkömmlich für Kraftfahrzeuge eingesetzt wird. Solche Sensoren arbeiten beispielsweise optisch, in dem die Feuchtigkeit auf einer Glasscheibe detektiert wird. Hierzu wird ein Infrarotlichtstrahl auf die Glasscheibe gerichtet und das zurückreflektierte Licht erfasst. Wenn Feuchtigkeitsniederschlag sich auf der Glasscheibe gesammelt hat, wird das Infrarotlicht reflektiert und der Infrarotsensor kann das reflektierte Licht detektieren. Liegt kein Niederschlag vor, so wird das Infrarotlicht nicht oder nur zu einem geringen Anteil detektiert, so dass der Sensor kein reflektiertes Infrarotlicht erfasst. Andere Ausgestaltungen eines Niederschlagssensors sind ebenfalls möglich, insbesondere können auch Niederschlagssensoren vorgesehen sein, die eine Niederschlagsmenge erfassen können.

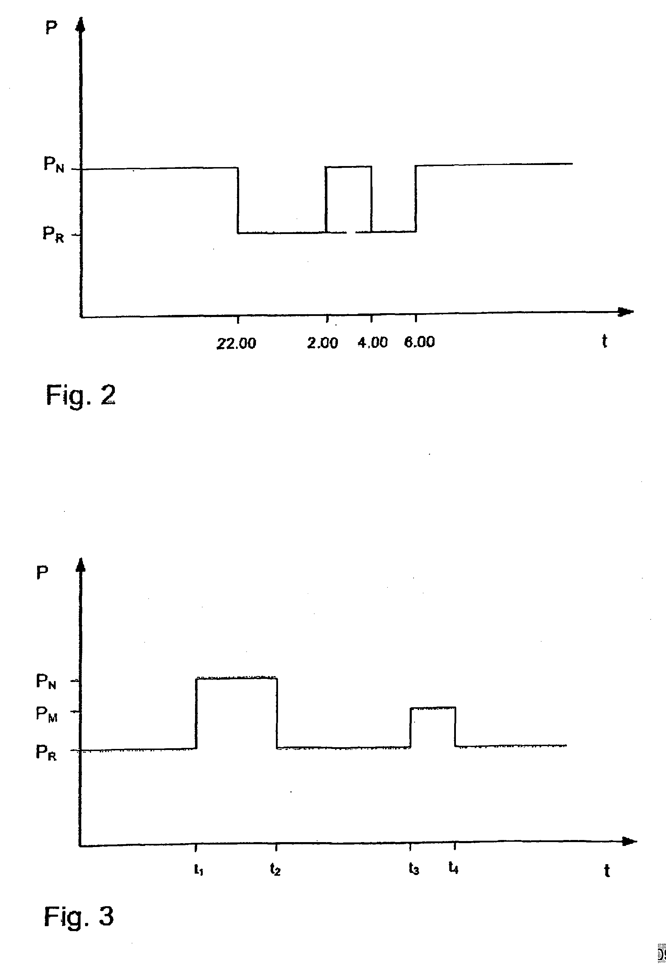

Fig. 2 zeigt den Betrieb einer Windenergieanlage, für die vorgegeben ist, dass zwischen 22. 00 Uhr und 6.00 Uhr ein leistungsreduzierter Betrieb zu erfolgen hat. Im regulären Betrieb, falls keine sonstigen Vorkommnisse vorliegen, wird die Windenergieanlage mit ihrer Nennleistung P_{N} betrieben. Wenn die Betriebssteuerung feststellt, dass 22.00 Uhr erreicht ist, wird in einen leistungsreduzierten Betrieb umgeschaltet. Im leistungsreduzierten Betrieb wird die Windenergieanlage bei Wind nur mit einer Maximalleistung P_{R} betrieben, wobei P_{R} kleiner als P_{N} ist.

In Fig. 2 schaltet die Windenergieanlage um 22.00 Uhr in den leistungsreduzierten Betrieb, in dem die maximale Leistung P_{R} beträgt. Um 2.00 Uhr in der Nacht schaltet die Windenergieanlage aus dem leistungsreduzierten Betrieb wieder in den Nennleistungsbetrieb mit P_{N} als maximaler Leistung. Das Umschalten erfolgt aufgrund einsetzenden Niederschlags, so dass der Regensensor 20 der Betriebssteuerung der Windenergieanlage anzeigt, dass ein leistungsreduzierter Betrieb nicht länger notwendig ist. Gegen 4.00 Uhr morgens lässt der Regen nach und der Regensensor 20 meldet an die Betriebssteuerung der Windenergieanlage, dass kein Niederschlag vorliegt. In diesem Fall schaltet die Windenergieanlage erneut in den leistungsreduzierten Betrieb, um um 6.00 Uhr morgens erneut in den Nennleistungsbetrieb zu schalten. In dem in Fig. 2 dargestellten Ausführungsbeispiel ist für die Windenergieanlage vorgesehen, dass diese aufgrund von Lärmschutzbestimmungen in der Zeit von 22.00 Uhr bis 6.00 Uhr bestimmte Emissionsgrenzwerte einzuhalten hat. Durch die Niederschläge von 2.00 Uhr bis 4.00 Uhr werden die Schallemissionen der Windenergieanlage unterdrückt, so dass selbst bei Betrieb mit Nennleistung vorbestimmte Emissionswerte der Windenergieanlage eingehalten werden können.

Fig. 3 zeigt den zeitlichen Verlauf der Leistung einer Windenergieanlage, für die z.B. aufgrund der Windrichtung dauerhaft ein leistungsreduzierter Betrieb mit der maximalen Leistung P_{R} vorgesehen ist. Die Windenergieanlage kann in Abhängigkeit von der Stärke des Niederschlags auf einen leistungsreduzierten Betrieb mit mittlerer Leistung P_{M} oder auf einen Betrieb mit Nennleistung P_{N} umschalten. In dem Beispiel aus Fig. 3 zeigt der Regensensor 20 zum Zeitpunkt t₁ an, dass sehr starker Niederschlag fällt. Die Windenergieanlage schaltet in den Nennleistungsbetrieb. Im Zeitpunkt t₂ zeigt der Regensensor 20 an, dass kein Niederschlag mehr fällt und die Windenergieanlage schaltet in den leistungsreduzierten Betrieb. Zum Zeitpunkt t₃ fällt leichter Regen. Die Windenergieanlage erhöht ihre Leistung auf den Wert P_{M}. Zum Zeitpunkt t₄ zeigt der Regensensor 20 an, dass kein Niederschlag mehr fällt und die Windenergieanlage schaltet wieder in den leistungsreduzierten Betrieb. Hierdurch kann der Leistungsertrag der Windenergieanlage verbessert werden, und die Schallschutzvorschriften eingehalten werden. In dem vorstehenden Ausführungsbeispiel, bei dem zwei Leistungsmaximalwerte für den leistungsreduzierten Betriebsmodus vorgesehen sind, können grundsätzlich auch mehr als zwei Leistungsmaximalwerte vorgesehen sein. In diesem Fall schaltet die Windenergieanlage proportional zu der festgestellten Niederschlagsmenge zu dem entsprechenden Leistungsmaximalwert um. Je größer die Niederschlagsmenge ist, um so größer kann der Leistungsmaximalwert sein. Grundsätzlich ist es auch denkbar, kontinuierliche Leistungsmaximalwerte für den leistungsreduzierten Betriebsmodus vorzusehen, derart, dass bei einem fehlenden Niederschlag oder einer Niederschlagsmenge unterhalb eines ersten Schwellwerts eine maximale Leistungsreduzierung der Windenergieanlage erfolgt und anschließend proportional zur Niederschlagsmenge ein Leistungsmaximalwert für die Windenergieanlage vorgegeben wird, bis zu einem zweiten Schwellwert für die Niederschlagsmenge, ab dem dann die Windenergieanlage mit Nennleistung betrieben werden kann.

Insbesondere für Schallschutzvorschriften, die auf einer relativen Lärmbelästigung beruhen, wie beispielsweise Vorschriften, die angeben, dass die von der Windenergieanlage emittierten Geräusche nur um einen vorbestimmten Wert oberhalb der Umgebungsgeräusche liegen dürfen, ist die Erfindung besonders vorteilhaft einsetzbar. Schreiben die Schallschutzvorschriften beispielsweise vor, dass während der Nacht die Umgebungsgeräusche nur um 3 dB überschritten werden dürfen, so kann sichergestellt werden, dass der einsetzende Regen den letztlich ausgestrahlten Schall der Windenergieanlage unterdrückt und trotz Nennleistung die Grenze von 3 dB nicht überschritten wird.

## Patentansprüche

1. Verfahren zum Betrieb einer Windenergieanlage, die in einen leistungsreduzierten Betriebsmodus geschaltet werden kann, um den von der Windenergieanlage emittierten Schall zu reduzieren, das folgende Verfahrensschritte aufweist:
- ein Regensensor erfasst, ob Niederschläge fallen, und
- der leistungsreduzierte Betriebsmodus wird beendet oder ein Umschalten in den leistungsreduzierten Betrieb unterbleibt, wenn der Regensensor Niederschläge erfasst.

2. Verfahren nach Anspruch 1, **dadurch gekennzeichnet, dass** der Regensensor die Stärke der Niederschläge erfasst, und der leistungsreduzierte Betriebsmodus beendet oder ein Umschalten in den leistungsreduzierten Betriebsmodus unterbleibt, wenn die erfassten Niederschläge einen vorbestimmten Schwellwert überschreiten.

3. Verfahren nach Anspruch 1 oder 2, **dadurch gekennzeichnet, dass** ein Betrieb der Windenergieanlage in dem leistungsreduzierten Betriebsmodus während einer vorbestimmten Tages- und/oder Nachtzeit vorgesehen ist, wenn kein Niederschlag durch den Regensensor erfasst wird.

4. Verfahren nach einem der Ansprüche 2 oder 3, **dadurch gekennzeichnet, dass** der leistungsreduzierte Betriebsmodus mindestens zwei unterschiedliche Leistungsmaximalwerte aufweist, wobei abhängig von der erfassten Stärke der Niederschläge, entweder der leistungsreduzierte Betriebsmodus beendet oder zu einem größeren Leistungsmaximalwert umgeschaltet wird.

## Claims

1. A method of operating a wind turbine that can be switched over to a power reduced mode of operation in order to reduce the noise emitted by the wind turbine, the method comprising the following steps:
• a rain sensor detects whether there are precipitations, and
• the power reduced mode of operation is stopped or a switching over to the power reduced mode of operation is omitted when the rain sensor detects precipitations.

2. The method according to claim 1, **characterised in that** the rain sensor detects the strength of the precipitations and the power reduced mode of operation is stopped or the switching over to the power reduced mode of operation is omitted when the detected precipitations exceed a predetermined threshold value.

3. A method according to claim 1 or 2, **characterised in that** operation of the wind turbine in the power reduced mode of operation is scheduled during a predetermined time of day and/or night if no precipitation is detected by the rain sensor.

4. A method according to any one of claims 2 or 3, **characterised in that** the power reduced mode of operation comprises at least two different maximum power values, wherein depending on the detected strength of the precipitations, the power reduced mode of operation is either stopped or switched over to a greater maximum power value.

## Revendications

1. Procédé de fonctionnement d'une éolienne qui peut être passée dans un mode de fonctionnement à puissance réduite pour réduire le son émis par l'éolienne, qui présente les étapes de procédé suivantes :
- un capteur de pluie détecte si des précipitations tombent, et
- le mode de fonctionnement à puissance réduite est terminé ou un passage au fonctionnement à puissance réduite n'est pas effectué lorsque le capteur de pluie détecte des précipitations.

2. Procédé selon la revendication 1, **caractérisé en ce que** le capteur de pluie détecte la force des précipitations et le mode de fonctionnement à puissance réduite se termine ou un passage au mode de fonctionnement à puissance réduite n'est pas effectué lorsque les précipitations détectées dépassent une valeur seuil prédéfinie.

3. Procédé selon la revendication 1 ou 2, **caractérisé en ce qu'**un fonctionnement de l'éolienne dans le mode de fonctionnement à puissance réduite est prévu pendant un moment de la journée et/ou de la nuit prédéfini lorsque aucune précipitation n'est détectée par le capteur de pluie.

4. Procédé selon une des revendications 2 ou 3, **caractérisé en ce que** le mode de fonctionnement à puissance réduite présente au moins deux valeurs maximales de puissance différentes, dans lequel, en fonction de la force détectée des précipitations, soit le mode de fonctionnement à puissance réduite se termine, soit on passe à une valeur maximale de puissance supérieure.
